# EUROPEAN PATENT APPLICATION

(11) **EP 2 687 340 A1**
(43) Date of publication of application: **22.01.2014**
(21) Application number: 13177044.8
(22) Date of filing: 18.07.2013
(51) Int. Cl.: B25J 9/02, B25J 9/10, B25J 19/00

(54) **Vertical handling module for a Cartesian-axis handling system**

(30) Priority: 19.07.2012 IT TO20120127 U
(71) Applicant: Tecno Center S.r.l. Con Socio Unico, 10078 Venaria Reale (TO) (IT)
(72) Inventor: Laurenti, Gilberto, 10093 Collegno (Torino) (IT)
(74) Representative: Rondano, Davide

(57) **Abstract**

The vertical handling module (10) comprises: a carriage (16) adapted to be slidably mounted on a horizontal section (14) of a horizontal handling unit of a Cartesian-axis handling system, a vertical section (12) provided with guide means (14) on which the carriage (16) is slidably mounted in a vertical direction, an electric actuation unit (28, 30, 32, 34) operatively interposed between the vertical section (12) and the carriage (16) to move the vertical section (12) with respect to the carriage (16) alternatively in one direction or in the other along said guide means (14), and a pneumatic assist system (40) acting between the vertical section (12) and the carriage (16) in parallel to the electric actuation unit (28, 30, 32, 34) to reduce the load acting on this latter. The pneumatic assist system (40) comprises a single pneumatic cylinder (40) received inside the vertical section (12).

## Description

The present invention generally refers to a Cartesian-axis handling system, and more specifically to a vertical handling module for such a handling system.

Cartesian-axis handling systems are normally used in industry, for example to move parts from a working station to another, and typically comprise a horizontal handling unit, having a guide section that extends along a horizontal direction, and a plurality of vertical handling units, each of which is slidably mounted along the guide section of the horizontal handling unit. Each vertical handling module typically comprises a section extending along a vertical direction, a pair of straight guide elements secured to the vertical section and oriented parallel to the longitudinal direction of this latter, a carriage provided with at least one pair of shoes slidably mounted on the guide elements, and an electric actuation unit for vertically moving the vertical section with respect to the carriage alternatively in one direction and in the other. The electric actuation unit typically comprises a toothed transmission belt, a driving pulley around which the toothed transmission belt is partially wound, a pair of guide pulleys and an electric gear motor for setting the driving pulley into rotation, alternatively in one direction and in the other, and hence for causing the toothed transmission belt, along with the vertical section, to translate, alternatively in one direction and in the other, with respect to the carriage. In order to reduce the load acting on the electric actuation unit, it is known to use a pneumatic assist system comprising a pair of pneumatic cylinders which are mounted on opposite sides of the axis of the vertical section and act each between a respective abutment member drivingly connected with the vertical section and a respective abutment member drivingly connected with the carriage, in parallel to the electric actuation unit.

It is an object of the present invention to provide a vertical handling module for a Cartesian-axis handling system that is improved over the prior art discussed above.

This and other objects are fully achieved according to the present invention by virtue of a vertical handling module for a Cartesian-axis handling system having the features set forth in the enclosed independent claim 1.

Further advantageous features of the vertical handling module according to the present invention are set forth in the dependent claims, the content of which is to be intended as an integral and integrating part of the following description.

The features and the advantages of the present invention will be clear from the following detailed description, given purely by way of non-limiting example with reference to the appended drawings, in which:
Figure 1 is a perspective view of a vertical handling module for a Cartesian-axis handling system according to a preferred embodiment of the present invention;
Figure 2 is a side elevation view of the vertical handling module of Figure 1;
Figure 3 is a perspective view of the vertical handling module of Figure 1, sectioned by a plane passing through the axis of the section and perpendicular to the axis of rotation of the driving pulley of the electric actuation unit of the vertical handling module;
Figure 4 shows the detail A of Figure 3 on an enlarged scale; and
Figure 5 is a perspective view showing the bottom part of the vertical handling module of Figure 1 on an enlarged scale, partially sectioned by the same section plane as that of Figures 3 and 4.

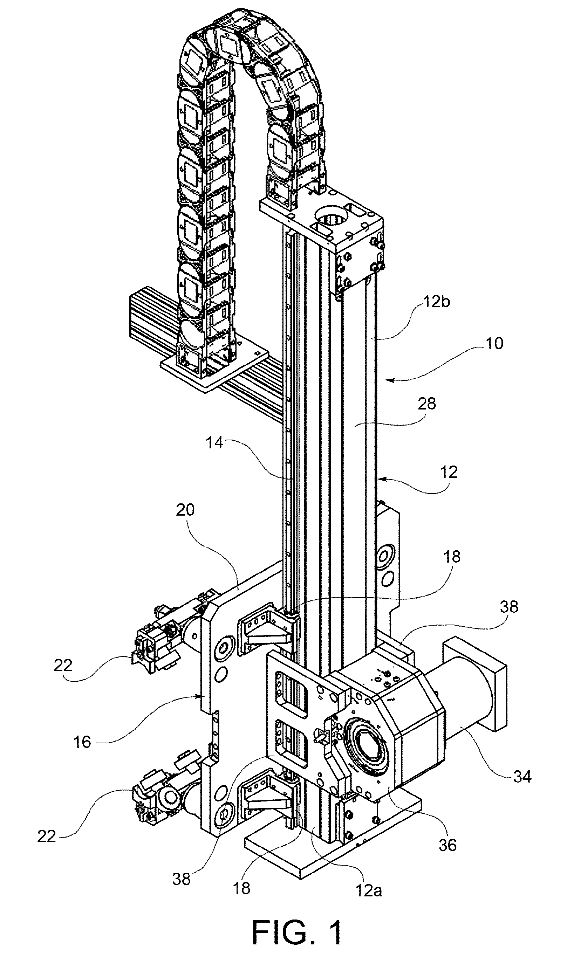

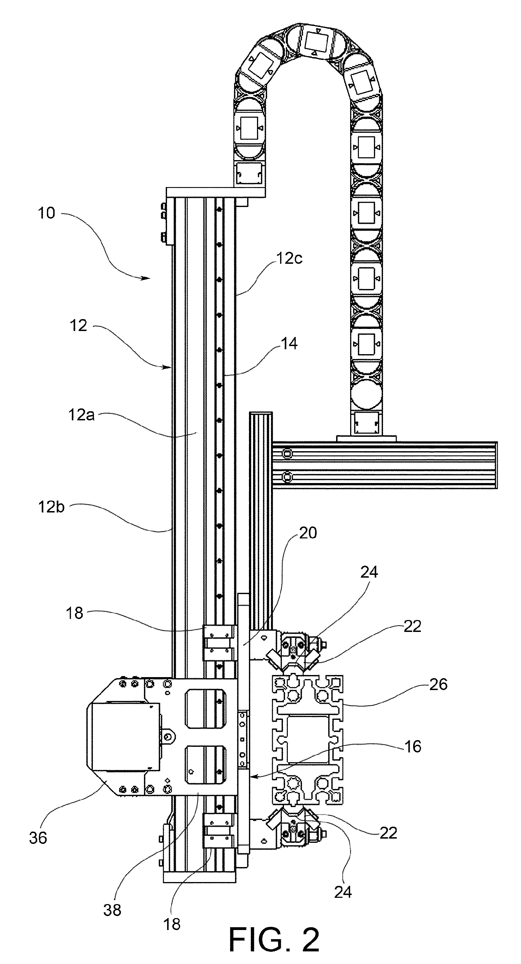

With reference first to Figures 1 and 2, a vertical handling module for a Cartesian-axis handling system according to a preferred embodiment of the present invention is generally indicated 10. The vertical handling module 10 comprises, in per-se-known manner, a section 12 (hereinafter referred to as the vertical section) extending along a vertical direction and having a cross-section of substantially rectangular shape, a pair of straight guide elements 14 (only one of which can be seen in Figures 1 and 2) which are secured to a pair of opposed lateral faces 12a of the vertical section 12 and are oriented parallel to the longitudinal direction of this latter, a carriage 16 provided with at least one pair of shoes 18 slidably mounted on the guide elements 14 (in the illustrated example, two pairs of shoes 18, of which Figures 1 and 2 show only the shoes mounted on one of the two guide elements 14), and an electric actuation unit for vertically moving the vertical section 12 with respect to the carriage 16 alternatively in one direction and in the other. The carriage 16 comprises a plate 20 arranged parallel to the other two faces of the vertical section 12 (hereinafter referred to as the front face 12b and as the rear face 12c, respectively) with respect to the lateral faces 12a on which the guide elements 14 are mounted. The shoes 18 are arranged on the side of the plate 20 of the carriage 16 facing towards the rear face 12c of the vertical section 12, while on the opposite side of the plate 20 further shoes 22 (not further disclosed herein, as they are not essential for the present invention) are arranged to be slidably mounted on a pair of straight guide elements 24 of a horizontal section 26 (Figure 2) of a horizontal handling unit that forms, along with the vertical handling module 10, a Cartesian-axis handling system.

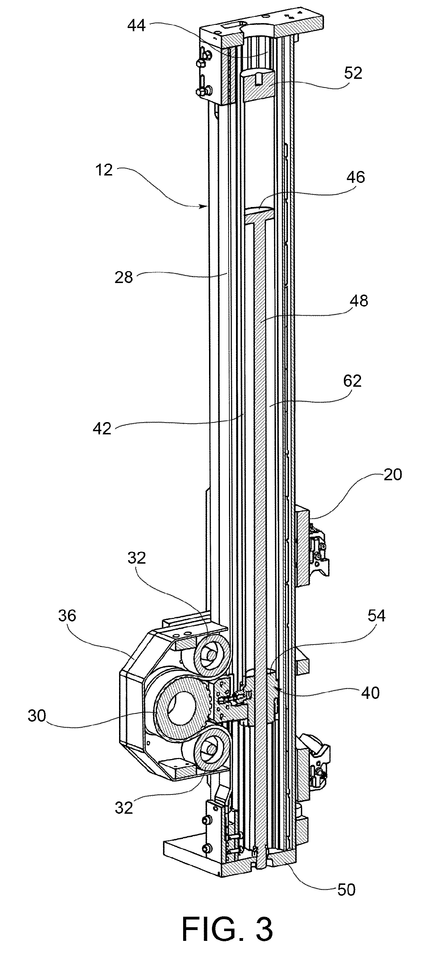

With reference to Figure 3 as well, the electric actuation unit of the vertical handling module 10 comprises, in per-se-known manner, a toothed transmission belt 28 which extends vertically along the front face 12b of the vertical section 12 and is secured at its opposite top and bottom ends to that section, a driving pulley 30 and a pair of guide pulleys 32 around which the toothed transmission belt 28 is partially wound so as to form an omega-shaped bend (as can be clearly seen in Figure 3), and an electric gear motor 34 for setting the driving pulley 30 into rotation alternatively in one direction and in the other. The driving pulley 30 and the guide pulleys 32 are arranged in such a manner that the respective axes of rotation are oriented horizontally and parallel to the front face 12b and to the rear face 12c of the vertical section 12. The driving pulley 30 and the guide pulleys 32 are received inside a casing 36 (hereinafter referred to as pulley casing), which is secured to the plate 20 of the carriage 16 by means of a pair of connection plates 38 extending perpendicular to the plate 20 on opposite sides of the vertical section 12. The gear motor 34 is mounted on the pulley casing 36 and is therefore drivingly connected with the carriage 16 as well. Therefore, a rotation of the driving pulley 30 in one direction or in the other under control of the electric gear motor 34 brings about a vertical translation of the toothed transmission belt 28, along with the vertical section 12, in one direction and in the other, with respect to the pulley casing 36, and hence with respect to the carriage 16.

According to a variant of embodiment, not shown in the drawings, the electric actuation unit might comprise, as motion conversion system for converting the rotary motion produced by the electric gear motor into a translational motion of the vertical section, a pinion and rack system instead of a toothed belt and pulley system, the pinion receiving the motion from the electric gear motor and meshing with a rack that is drivingly connected for translation with the vertical section.

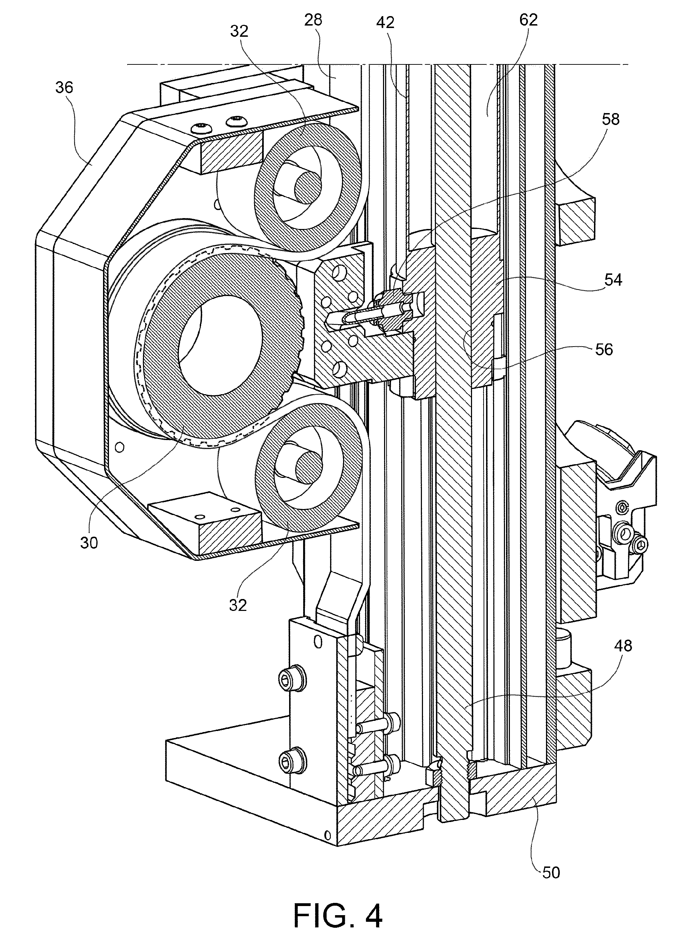

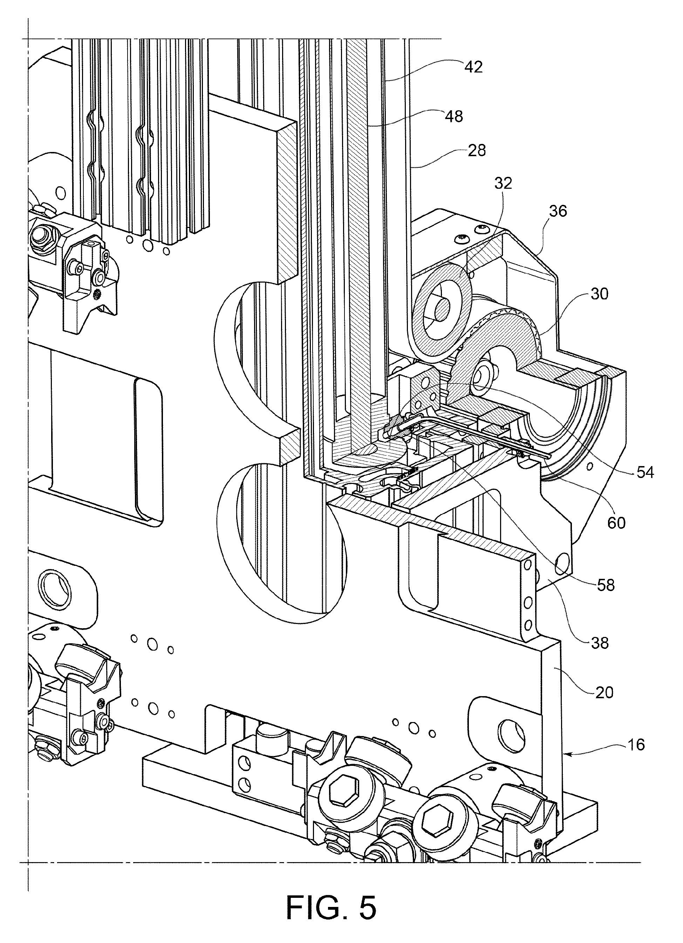

As in the prior art, in order to reduce the load acting on the electric actuation unit, in particular on the electric gear motor 34, the vertical handling module according to the present invention is also provided with an assist system using the pressure of a fluid, typically air, to apply on the vertical section an upward vertical force in parallel to the upward vertical force applied by the electric actuation unit. According to the invention, the assist system comprises a single pneumatic cylinder, which is generally indicated 40 and is received inside the vertical section 12, instead of a pair of pneumatic cylinders placed outside the vertical section, as provided for in the above-discussed prior art. With reference in particular to Figures 3 to 5, the pneumatic cylinder 40 comprises a cylindrical tube 42 received in a cavity 44 with vertical axis provided inside the vertical section 12 and a piston 46 which is slidably received inside the cylindrical tube 42 and is provided with a stem 48. Preferably, the cavity 44 is made so that its own axis substantially coincides with the axis of the vertical section 12, in order to avoid an asymmetrical load distribution on the vertical section and thus to reduce to the minimum the deformations of this section. The cylindrical tube 42 is drivingly connected with the carriage 16, while the piston 46 is drivingly connected with the vertical section 12, whereby the relative movement of the piston 46 with respect to the cylindrical tube 42 produces a relative movement of the vertical section 12 with respect to the carriage 16. More specifically, in the proposed embodiment the cylindrical tube 42 is secured to the pulley casing 36, while the piston 46 is secured at the bottom end of the stem 48 to a mounting plate 50, which is secured in turn to the bottom end of the vertical section 12. The cylindrical tube 42 is closed at the top end by a top cap 52, in which a vent hole (or a vent valve) of suitable size is provided to allow air to leave quickly the cylindrical tube 42 when the piston 46 moves upwards, so as not to hinder the upward movement of the piston, and at the bottom end by a bottom cap 54 having a central through hole 56 through which the stem 48 of the piston 46 slides. A fitting 58 is secured to the bottom cap 54 and a supply conduit 60 for supplying pressurized air to the pneumatic cylinder 40 is connected to the fitting. Therefore, by supplying pressurized air to the pneumatic cylinder 40, the pressurized air enters the annular chamber (indicated 62) defined laterally between the stem 48 of the piston 46 and the cylindrical tube 42 and vertically between the piston 46 and the bottom cap 54, thus causing the piston 46, along with the vertical section 12, to move upwards. The pneumatic cylinder 40 is therefore able to apply on the vertical section 12 an upward force that reduces the load acting on the electric gear motor 34.

In view of the above description, the advantages offered by a vertical handling module according to the invention over the prior art discussed in the introductory part of the description are clear.

First of all, the vertical handling module according to the invention is a single integrated assembly, the pneumatic actuation portion of which is wholly received inside the vertical section, with significant advantages for example in terms of time and costs required to install the unit.

Secondly, the upward force applied by the pneumatic cylinder on the vertical section is aligned with the axis of the section itself, which allows to reduce the deformations under load of this latter.

A further advantage is the improved appearance of the unit, as there are now less visible components (cables, troughs, cylinders etc.).

Furthermore, the vertical handling module according to the invention has a lower weight with respect to the prior art, since the plate of the carriage can be smaller and the vertical section shorter, the vertical travel remaining unchanged, because mounting points for the pneumatic cylinders outside the vertical section are no more required.

Naturally, the principle of the invention remaining unchanged, the embodiments and the constructional details may vary widely from those described and illustrated purely by way of non-limiting example, without thereby departing from the scope of the invention as defined in the attached claims.

For example, even though in the proposed embodiment the pulley casing and the electric gear motor are placed, with respect to the plate of the carriage, on the same side as the vertical section, i.e. on the opposite side of the horizontal section on which the vertical handling module is slidably mounted, according to a variant of embodiment of the invention (not shown) the pulley casing and the electric gear motor will be placed on the same side as the horizontal section with respect to the plate of the carriage. The same applies in case a pinion and rack system is used as motion conversion system instead of a toothed belt and pulley system.

## Claims

1. Vertical handling module (10) for a Cartesian-axis handling system, the vertical handling module (10) comprising:
- a carriage (16) adapted to be slidably mounted on a horizontal section (14) of a horizontal handling unit of the Cartesian-axis handling system,
- a vertical section (12) provided with guide means (14) on which the carriage (16) is slidably mounted in a vertical direction,
- an electric actuation unit (28, 30, 32, 34) operatively interposed between the vertical section (12) and the carriage (16) to move the vertical section (12) with respect to the carriage (16) alternatively in one direction and in the other along said guide means (14), and
- a pneumatic assist system (40) acting between the vertical section (12) and the carriage (16) in parallel to the electric actuation unit (28, 30, 32, 34) to reduce the load acting on this latter,
**characterized in that** the pneumatic assist system (40) comprises a single pneumatic cylinder (40) received inside the vertical section (12).

2. Vertical handling module according to claim 1, wherein the pneumatic cylinder (40) comprises a cylindrical tube (42), which is received in a cavity (44) with vertical axis provided inside the vertical section (12), and a piston (46), which is slidably received inside the cylindrical tube (42) and is provided with a stem (48), and wherein the cylindrical tube (42) is drivingly connected with the carriage (16) and the piston (46) is drivingly connected with the vertical section (12).

3. Vertical handling module according to claim 1 or claim 2, wherein the electric actuation unit (28, 30, 32, 34) comprises a toothed transmission belt (28) which extends vertically along a face (12c) of the vertical section (12) and is secured at its top end and at its bottom end to the vertical section (12), a driving pulley (30) and a pair of guide pulleys (32) around which the toothed transmission belt (28) is partially wound so as to form an omega-shaped bend, and an electric gear motor (34) adapted to set into rotation the driving pulley (30), alternatively in one direction and in the other.

4. Vertical handling module according to claim 3, further comprising a pulley casing (36) secured to the carriage (16), in which the driving pulley (30) and the guide pulleys (32) of the electric actuation unit (28, 30, 32, 34) are mounted and to which the electric gear motor (34) of the electric actuation unit (28, 30, 32, 34) is secured.

5. Vertical handling module according to claim 4 when depending on claim 2, wherein the cylindrical tube (42) of the pneumatic cylinder (40) is secured to the pulley casing (36).

6. Vertical handling module according to claim 1 or claim 2, wherein the electric actuation unit comprises a rack drivingly connected for translation with the vertical section (12), a pinion carried by the carriage (16) and meshing with the rack, and an electric gear motor (34) adapted to set the pinion into rotation, alternatively in one direction and in the other.

7. Vertical handling module according to any of claims 2 to 6, wherein the piston (46) of the pneumatic cylinder (40) is secured, at the bottom end of the stem (48), to a mounting plate (50) which is secured in turn to the bottom end of the vertical section (12).

8. Vertical handling module according to any of claims 2 to 7, wherein the cylindrical tube (42) of the pneumatic cylinder (40) is closed at its bottom by a bottom cap (54) having a central through hole (56) through which the stem (48) of the piston (46) slides, and wherein a fitting (56) for supplying pressurized air to the pneumatic cylinder (40) is secured to the bottom cap (54).

9. Vertical handling module according to any of claims 2 to 8, wherein the cylindrical tube (42) of the pneumatic cylinder (40) is closed at its top by a top cap (52) having a vent hole or valve so as to allow to discharge air from the cylindrical tube (42) when the piston (46) is moving upwards.
